# EUROPÄISCHE PATENTSCHRIFT

(11) **EP 1 815 136 B1**
(45) Veröffentlichungstag und Bekanntmachung des Hinweises auf die Patenterteilung: **13.07.2016**
(21) Anmeldenummer: 05806919.6
(22) Anmeldetag: 18.11.2005
(51) Int. Cl.: F03D 1/00, F03D 1/06, F03D 80/00

(54) **VORRICHTUNG UND VERFAHREN ZUR MONTAGE UND/ODER DEMONTAGE EINES BAUTEILS EINER WINDKRAFTANLAGE**
DEVICE AND METHOD FOR MOUNTING AND/OR DISMANTLING A COMPONENT OF A WIND TURBINE
DISPOSITIF ET PROCEDE POUR LE MONTAGE ET/OU LE DEMONTAGE D'UN COMPOSANT D'UNE EOLIENNE

(30) Priorität: 22.11.2004 DE 102004056340
(43) Veröffentlichungstag der Anmeldung: 08.08.2007
(73) Patentinhaber: Senvion GmbH, 22297 Hamburg (DE)
(72) Erfinder: TREDE, Alf, 25885 Immenstedt (DE); MIER, Mathias, 25813 Husum (DE); FUGLSANG-PETERSEN, Jochen, 25746 Heide (DE)
(74) Vertreter: Groth, Wieland
(86) Internationale Anmeldenummer: PCT/DE2005/002081
(87) Internationale Veröffentlichungsnummer: WO 2006/053554

(56) Entgegenhaltungen:
- EP-A- 1 126 163
- EP-A- 1 239 150
- WO-A-2004/067954
- DE-A1- 10 318 675
- DE-C1- 19 726 408
- DE-U1-202004 016 460
- PATENT ABSTRACTS OF JAPAN Bd. 2003, Nr. 12, 5. Dezember 2003 (2003-12-05) -& JP 2004 293455 A (EBARA CORP), 21. Oktober 2004 (2004-10-21)
- PATENT ABSTRACTS OF JAPAN Bd. 006, Nr. 253 (M-178), 11. Dezember 1982 (1982-12-11) -& JP 57 148073 A (TOKYO DENRYOKU KK; others: 01), 13. September 1982 (1982-09-13)
- PATENT ABSTRACTS OF JAPAN Bd. 2003, Nr. 12, 5. Dezember 2003 (2003-12-05) -& JP 2005 002875 A (SAKURAI GIKEN KOGYO KK; JP HYTEC:KK), 6. Januar 2005 (2005-01-06)

## Beschreibung

Die Erfindung betrifft eine Vorrichtung zur Montage und/oder Demontage eines Bauteils, insbesondere eines Rotorblatts, einer Windkraftanlage und eine Windkraftanlage und eine Manschette, insbesondere für die genannte Vorrichtung, sowie ein Verfahren zur Montage und/oder Demontage eines Bauteils, insbesondere eines Rotorblattes oder Rotorblattlagers, einer Windkraftanlage.

Bei Windkraftanlagen kann eine Beschädigung der Rotorblätter z. B. durch Blitzschlag, Korrosion oder Hagelschlag auftreten. Die beschädigten Rotorblätter werden dann ausgetauscht, um die Ausfallzeiten der Windkraftanlage möglichst gering zu halten.

Der Austausch der Rotorblätter erfolgt in bekannter Weise mittels eines Krans. Zunächst wird das beschädigte Rotorblatt dabei waagerecht zu einer Seite zeigend oder senkrecht unter die Rotornabe gedreht. Dort wird das beschädigte Rotorblatt am Zugseil des Krans befestigt. Die Rotorblätter weisen jeweils einen Flansch an ihrer Wurzel auf, der mit an der Rotornabe angeordneten Flanschen fest verbunden ist. Die Flanschverbindung des beschädigten Rotorblatts wird gelöst, und das beschädigte Rotorblatt kann dann herabgelassen und abtransportiert werden. Nachfolgend wird ein intaktes Rotorblatt am Zugseil des Krans befestigt und zur Rotornabe heraufgezogen. Nachteilig an den bekannten Verfahren sind jedoch die höhen Kosten für Miete, An- und Abfahrt und Bedienung des Krans.

Durch die WO 2004/067954 A1 ist ein Montageverfahren bekannt, bei dem wenigstens zwei Seile zwischen dem Nabenbereich der WEA und dem Bodenbereich gespannt werden, entlang derer das Rotorblatt über Durchlaufwinden hochziehbar ist. Nachteilig an dem Verfahren ist jedoch die Tatsache, dass das Rotorblatt horizontal zum Boden angeliefert wird und also das Rotorblatt zunächst in eine senkrechte Stellung gebracht werden muss. Das kann zu Beschädigungen der Rotorblattspitze führen, wenn diese über den Boden gezogen wird. Üblicherweise wird die Blattspitze dabei mit einem kleinen Hilfskran angehoben, oder die Blattspitze wird auf einen Wagen gelegt und auf ihm Ober den Boden gerollt. Letztere Variante des Verfahrens setzt einen ziemlich ebenen Boden voraus. Darüber hinaus besteht die Gefahr, dass das dicht am Turm transportierte Rotorblatt bei starkem Wind gegen den Turm schlägt.

Aus der EP 1 239 150 A2 ist eine transportable Arbeitsvorrichtung mit Hebegerät für eine Windkraftanlage bekannt, wobei ein Hebegerät entlang einer Führungsseilanordnung entlang zum Mast hochgezogen werden kann, dort im betriebsbereiten Zustand an einer Montagestelle in geeigneter Höhe am Mast befestigt wird und der Rotor mit Hilfe einer Hebeeinrichtung vom Kopf zum Boden herabgelassen werden kann.

Aus der WO 97/21621 ist ein Montagevorrichtung bekannt, die einen verschwenkbaren Turmaufsatz aufweist, an dessen Ausleger der Generator zunächst hochgezogen und nach Erreichen einer hinreichenden Höhe durch Verschwenken des Auslegers über dem Turmkopf positioniert wird.

Es ist Aufgabe der Erfindung, ein Verfahren und eine Vorrichtung zur Verfügung zu stellen, mit Hilfe dessen bzw. derer eine einfache und schonende Montage bzw. Demontage von Bauteilen, insbesondere Rotorblättern, einer Windkraftanlage ohne Kran möglich ist.

Hinsichtlich der Vorrichtung wird die Aufgabe durch eine Montage- bzw. Demontagevorrichtung mit den Merkmalen des Anspruchs 1 und durch eine Windenergieanlage mit den Merkmalen des Anspruchs 12 erfüllt.

Die Erfindung macht von dem Konzept Gebrauch, eine zur Montage und/oder Demontage am Führungsseil vorzugsweise ortsfeste Halteeinrichtung zur Verfügung zu stellen, von der ein Halteseil für das Bauteil abgeht, mit dessen Hilfe das Bauteil transportiert wird. Günstigenfalls ist das Ende des Halteseils am Bauteil befestigt oder das Halteseil ist in eine am Bauteil angeordnete Umlenkrolle eingeschoren. Das Halteseil ist bei der zweiten Ausführungsform günstigenfalls zum Führungsmittel, vorzugsweise zur Halteeinrichtung zurückgeführt und sein Ende am Turmkopf befestigt. Die Halteeinrichtung übernimmt quasi einen Teil der herkömmlichen Kranfunktion.

Das Führungsmittel ist günstigenfalls schräg zwischen Turmkopf und Boden gespannt. In einer bevorzugten Ausführungsform der Erfindung, ist das Führungsmittel als fest gespanntes Führungsseil ausgebildet, so dass die Position der Halteeinrichtung auch unter der Zuglast des Bauteils am Führungsseil feststeht oder fixiert bleibt Die Position der Halteeinrichtung ist günstigenfalls wähmed des Montage- Demoritagevorgangs auch Im Raum im Wesentlichen ortsfest und gegenüber der Windkraftanlage positionsfest. Gewisse Schwankungen und Bewegungen der ortsfesten

Halteeinrichtung können dabei aber nicht ausgeschlossen werden, und sie sind auch nicht schädlich.

In einer anderen bevorzugten Ausführungsform der Erfindung ist die Halteeinrichtung während des Montage-/ Demonatgevorgangs entlang des Führungsmittels verfahrbar. Auf diese Weise ist das vom Boden am Halteseil angehobene Bauteil entlang des Führungsmittels zum Turm hin bewegbar. Auf weitere Lastseile kann bei dieser Ausführungsform verzichtet werden. Vorzugsweise kann die Halteeinrichtung an verschiedenen Positionen des Führungsmittels positionsfest arretiert werden. Die verschiedenen Arretierpositionen können kontinuierlich ineinander übergehen.

Es ist auch denkbar, eine verfahrbare Halteeinrichtung mit Lastseilen zu kombinieren.

Das Führungsseil ist vorzugsweise mit einem Ende am Turmkopf befestigt und mit einem anderen Ende, beabstandet vom Turmfuß, im Boden, z.B. mittels eines Erdankers, verankert oder an einem entsprechend platzierten, schweren Wagen gehalten. Das bodenseitige Ende des Führungsmittels ist dabei nicht mehr im Bereich des Turmfußes der Windkraftanlage angeordnet, insbesondere braucht das Führungsmittel nicht im Fundament der Windenergieanlage befestigt zu sein.

Die Länge des Halteseils zwischen Halteeinrichtung und Bauteil kann verändert werden, indem ein Ende des Halteseils zweckmäßigerweise an einem Anschlagpunkt des Bauteils, insbesondere im Bereich einer Rotorblattspitze, befestigt wird und ein anderes Ende des Halteseils eingezogen, aufgerollt o.ä. oder verlängert, abgerollt o.ä. wird und das Bauteil damit vom Boden angehoben bzw. zum Boden abgesenkt wird. Die Halteeinrichtung kann dazu als am Führungsmittel befestigte Seilwinde oder günstiger, als Umlenkrolle für das Halteseil ausgeformt sein. Im letzteren Fall kann ein anderes Ende des Halteseils in eine Halteseilwinde eingeschoren sein. Die Halteseilwinde ist vorzugsweise neben dem Bodenanker oder am Turmkopf angeordnet. In einer weiteren Ausführungsform ist die Halteseilumlenkrolle während des Montagevorgangs in ihrer Position am Führungsseil entlang variierbar.

Günstigerweise ist zusätzlich zu der Halteeinrichtung wenigstens eine Lasteinrichtung im Bereich des Turmkopfes befestigt, von der ein Lastseil, dessen Länge zwischen Lasteinrichtung und Bauteil veränderbar ist, abgeht. Das wenigstens eine Lastseil kann dazu mit einem Ende an einem Anschlagpunkt des Bauteils, insbesondere im Bereich einer Rotorblattwurzel, befestigt sein. Das Lastseil kann über eine vorzugsweise als Lastseilumlenkrolle ausgebildete Lasteinrichtung geführt sein, und ein anderes Ende des wenigstens einen Lastseils kann in eine zugeordnete Lastseilwinde eingeschoren sein. Vorzugsweise sind genau zwei Lastseile mit zwei im Bereich des Turmkopfes zugeordneten Lastseilumlenkrollen vorhanden. Die vorzugsweise insgesamt drei Seile, zwei Lastseile und ein Halteseil, ermöglichen einen lagestabilen Transport des Bauteils, insbesondere des Rotorblatts. Dabei wird die Hauptlast von den Lastseilen getragen. Die wenigstens eine Lastseilumlenkrolle ist dichter an der Längsachse des Turmes angeordnet als die Halteeinrichtung. Die Lastseile und das Halteseil befinden sich auf derselben Turmseite.

Die Halteeinrichtung ist günstigenfalls von der Windkraftanlage beabstandet. Die Beabstandung wird z.B. durch die Schräge in der Anordnung des Führungsmittels hervor gebracht. Ein minimaler Abstand zwischen Windkraftanlage und Halteeinrichtung kann wenigstens 10%, vorzugsweise 20%, der Turmhöhe und/oder wenigstens eine halbe Rotorblattlänge betragen. Günstigerweise ist die Halteeinrichtung wenigstens um eine Rotorblattlänge von der Windkraftanlage beabstandet. Die Beabstandung ermöglicht es, Rotorblätter besonders einfach und schonend zu montieren/demontieren. Die im Wesentlichen senkrechte Projektion der Lasteinrichtungen und der Halteeinrichtung auf den Boden bildet Ecken eines Dreieck, die weit genug voneinander beabstandet sind, dass ein dort gehaltenes Rotorblatt, insbesondere im Bodenbereich, stabil in der Luft transportierbar ist. Das an der Rotorblattspitze angeschlagene Halteseil steuert im Bodenbereich die Höhe der Rotorblattspitze über dem Boden. Die Spitze braucht nicht mehr, wie bisher, am Boden entlang gezogen zu werden oder mittels eins Hilfskrans gehalten zu werden, bis sich das Rotorblatt vertikal aufgerichtet hat, sondern sie kann zusammen mit der Wurzel, die mit den vorzugsweise zwei Lastseilen anhebbar und absenkbar ist, bei der Montage sofort angehoben und bei der Demontage erst spät abgesenkt werden. So kann das Rotorblatt zumindest im Bodenbereich mit seiner Längsachse im Wesentlichen parallel zum Boden ausgerichtet bleiben und senkrecht zum Boden transportiert werden. Das spart Zeit und damit auch Kosten bei der Montage/Demontage, da Rotorblätter i.d.R. auf ihrer Nase liegend mit hoch stehender Hinterkante zur Anlage hingebracht und von ihr abtransportiert werden. Damit ist seine direkte Entladung vom bzw. Aufladung auf einen Sattelschlepper möglich. Hierdurch erleichtert sich das Handling der bis zu 20t schweren, sehr empfindlichen Rotorblätter am Boden ganz erheblich.

Ein weiterer Vorteil der Beabstandung des Haltemittels von der Windenergieanlage ist die sich daraus über das Haltemittel ermöglichende Steuerung des Abstandes des Bauteils von der Windkraftanlage. Durch Verkürzen des Haltemittels ist die Entfernung des Bauteils zur Windkraftanlage vergrößerbar und durch Verlängern des Haltemittels ist die Entfernung ggf. verringerbar. Die Beabstandung der Halteeinrichtung ermöglicht es, während des Transports des Rotorblattes eine Kraft, insbesondere auf die Rotorblattspitze wirken zu lassen, die vom Turm weggerichtet ist.

In einer bevorzugten Ausführungsform der Erfindung weisen an der Windkraftanlage montierte Rotorblätter Anschlagpunkte für Verbindungsseile auf. An jedem der von einem Rotorblatt abgehenden Verbindungsseile ist jeweils eine Lastseilumlenkrolle befestigt. Die Anschlagpunkte sind dabei von einem Dach eines im Turmkopf angeordneten Maschinenhauses aus für das Wartungspersonal bedienbar. Dazu wird das montierte Rotorblatt vorzugsweise in 12-Uhr Stellung gebracht.

Die Anschlagpunkte können in unterschiedlichen Ausführungsformen zur Verfügung gestellt werden. Vorzugsweise werden Rotorblätter in Serie mit an beschriebenen Stellen versehenen Anschlagpunkten ausgestattet. Die Anschlagpunkte können in die Rotorblattaußenwandung im Bereich der Rotorblattwurzel integriert sein. Dabei sind in das Rotorblatt eingelassene Gewinde oder Ösen denkbar. Vorzugsweise sind zwei sich gegenüberliegende Anschlagpunkte vorgesehen, deren Verbindungslinie quer, vorzugsweise im Wesentlichen senkrecht zu der durch Rotorblattnase und Rotorblatthinterkante aufgespannten Ebene verläuft. Hier ist es möglich, den Rotor in den Wind zu drehen und die montierten Rotorblätter in Fahnenstellung und V-Stellung oberhalb des Maschinenhauses zu bringen und die Verbindungsseile an dem jeweils unteren Anschlagpunkt der beiden in V-Stellung befindlichen Rotorblätter zu befestigen. Bei Windstille ist es auch denkbar, die montierten Rotorblätter in Betriebsstellung zu bringen und V-förmige Verbindungsseile an jedem der beiden Rotorblätter zu montieren.

Die integrierten Anschlagpunkte des zu montierenden/demontierenden Rotorblatts können, kostengünstig, den Anschlagpunkten der montierten Rotorblätter baugleich sein. Jeder der beiden Anschlagpunkte des zu montierenden/demontierenden Rotorblatts ist für ein Ende eines Lastseils bestimmt. Die oben beschriebene Position der beiden Anschlagpunkte ermöglicht hier, das Rotorblatt mit der Rotorblatthinterkante vom Turm weg weisend zu montieren/demontieren. Der für den Transport des Rotorblatts vorgesehene Sattelschlepper sollte dazu in Richtung oder Verlängerung der Rotorachse vor den Turmfuß gefahren werden.

Anschlagpunkte können aber auch, insbesondere bei bereits bestehenden Rotorblättern, die keine integrierten Anschlagpunkte aufweisen, durch extra zur Montage um die Rotorblätter gelegte Manschetten zur Verfügung gestellt werden. Die Manschetten weisen dann Ösen o.ä. zur Befestigung der Verbindungsseile auf bzw. zur Befestigung der Lastseile auf.

Die Manschette kann in einer einfachen Form als Spanngurt ausgeführt sein, jedoch sind auch schlauchklemmenartige oder feste, z.B. einen Metallrahmen aufweisende Manschetten denkbar. Sie können Vorrichtungen zur Ausbildung einer kraftschlüssigen Verbindung der Manschette mit dem Bauteil aufweisen. Die Vorrichtungen können innenseitig angeordnete Blähkörper aufweisen. Aus Sicherheitsgründen sind wenigstens zwei Blähkörper pro Manschette vorgesehen. Die Manschetten können in einem Querschnitt einem Rotorblattquerschnitt angepasst sein.

In einer weiteren Ausführungsform der Erfindung sind Lasteinrichtungen, insbesondere Lastseilumlenkrollen, in den zwischen benachbarten Flanschen einer Rotornabe angeordneten Stegen befestigt. Die an den Stegen befestigten Lasteinrichtungen ermöglichen die Montage/Demontage von Rotorblättern auch dann, wenn nur ein Rotorblatt oder gar kein Rotorblatt an der Rotornabe montiert ist und die zugehörigen Anschlagpunkte folglich fehlen.

In einer bevorzugten Ausführungsform der Erfindung wird ein Anschlagpunkt für das Haltemittel, insbesondere das eine Ende des Halteseils, am zu montierenden/demontierenden Rotorblatt durch eine über die Rotorblattspitze steckbare Tasche zur Verfügung gestellt. Möglich ist es aber auch, eine vorzugsweise den oben beschriebenen Manschetten ähnliche Manschette um die Rotorblattspitze zu legen und das Halteseil an ihr zu befestigen. Auch dieser Anschlagpunkt kann aber integriert und den oben beschriebenen, integrierten Anschlagpunkten baugleich sein.

Bei gekrümmten Rotorblättern, so genannten vorgebogenen Rotorblättern oder auch "banana blades", kann das Halteseil auch mehr im In Längsrichtung des Rotorblatts mittleren Bereich befestigt werden. Hier kann ein Anschlagpunkt in der oben beschriebenen Weise vorgesehen werden. Dadurch wird ein Umschlagen des an den Endpunkten gehaltenen "banana blade" verhindert.

Die Befestigung des Rotorblatts an der Rotornabe kann über eine Flanschverbindung erfolgen. Das Rotorblatt weist dabei. z. B. an seinem einen Ende, einen Flansch mit Bolzenmuster auf, der zur Verbindung mit einem freien Flansch mit Lochmuster der Rotornabe bestimmt ist. Ein Abgleich der beiden Flanschmuster bei der Montage und Demontage wird durch die Steuermöglichkeiten des Rotorblatts erleichtert.

Eine Verbindung der beiden Lastseilumlenkrollen mit den beiden unteren Anschlagpunkten der bereits montierten und in V-Stellung befindlichen Rotorblättern hat hier den Vorteil, dass die den montierten Rotorblättern zugeordneten Winkelverstelleinrichtungen in der Rotornabe zur Positionsverstellung der Lastseilumlenkrollen und damit der Entfernung der Rotorblattwurzel zum Turm genutzt werden können. Weitere relative Positionsverstellungen der beiden Flansche werden durch unterschiedliche Betätigung der beiden Lastseilwinden erreicht, wodurch das zu montierende/demontierende Rotorblatt gekippt werden kann. Eine zweite Kippbewegung wird durch Anziehen bzw. Nachlassen des Halteseils ermöglicht. Bei der Demontage wird der Flansch zunächst etwas gelöst, so dass auch hier die Stellung des Rotorblatts leicht geändert werden kann und Spannungen abgebaut werden können.

Hinsichtlich des Verfahrens wird die Aufgabe durch ein Verfahren mit den Merkmalen des Anspruchs 15 gelöst.

Das erfindungsgemäße Verfahren gestattet, wenigstens im Bodenbereich, bei einer im Wesentlichen parallelen Ausrichtung der Rotorblattlängsrichtung zum Boden, das Rotorblatt senkrecht zum Boden zu bewegen. Dadurch wird in vorteilhafter Weise ein Entladen und Beladen des Rotorblatts von einem bzw. auf ein Transportfahrzeug ermöglicht.

Bei der Montage wird das Bauteil, insbesondere das Rotorblatt, vorzugsweise so weit wie möglich, d.h. bis zu einer vorrichtungsbedingt erreichbaren, maximalen Höhe in seiner horizontalen Lage angehoben. Dabei ist die Montagevorrichtung vorzugsweise derart orientiert, dass das Rotorblatt in Richtung seiner Längsachse angeströmt wird. Dadurch wird dem Wind eine nur geringe Angriffsfläche geboten, und das Rotorblatt kann nicht gegen den Turm schlagen. Vorzugsweise nahezu auf Montagehöhe, wird das Rotorblatt dann um eine Querachse gedreht und senkrecht unter dem Turmkopf unterhalb eines freien Flansches positioniert. Der Flanschabgleich erfolgt dann in feiner Steuerarbeit.

Bei der Montage der Vorrichtung kann zunächst das Führungsmittel am Turmkopf befestigt werden. Das vorzugsweise als Führungsseil ausgestaltete Führungsmittel wird unter Verwendung einer Halteseilwinde gespannt. Zur Erzielung einer besseren Kraftübersetzung kann zusätzlich ein Flaschenzug zum spannen des Führungsseils verwendet werden. Es ist denkbar, zuerst das Führungsmittel und nachfolgend die Lastmittel zu montieren, oder die Montage in der umgekehrten Reihenfolge durchzuführen.

Bei der Demontage des Bauteils, insbesondere des Rotorblatts, wird die Flanschverbindung gelöst, und das Rotorblatt wird nur etwas abgesenkt und in möglichst großer, maximaler Höhe bereits in die horizontale Position gebracht. Das horizontal ausgerichtete Rotorblatt wird dann im Wesentlichen senkrecht zum Boden abgesenkt.

Die Erfindung betrifft auch ein Verfahren zum kranlosen Ersetzen eines Rotorblattlagers eines Rotorblattes einer Windenergieanlage mit Rotornabe, indem: ein Rotörblatt mit einem Rotorblattlager von der Rotornabe demontiert wird, das eine Rotorblattlager gegen ein anderes Rotorblattlager ersetzt wird und das Rotorblatt mit dem anderen Rotorblattlager an die Rotornabe montiert wird. Das erfindungsgemäße ermöglichen Austausch ohne Verwendung eines teuren Mobilkrans.

Rotorblattlager sind durch ständige Beanspruchung hohem Verschleiß ausgesetzt. Ihr Ersatz erfolgt vorzugsweise durch die beschriebene Vorrichtung ohne die Verwendung eines Krans.

Die Erfindung wird anhand eines Ausführungsbeispiels in drei Figuren beschrieben. Dabei zeigen:
- Fig. 1a: schematische Darstellung eines erfindungsgemäßen Verfahrens,
- Fig. 1b: Anschlagpunkte für ein vorgebogenes Rotorblatt,
- Fig. 2: Frontalansicht eines geöffneten Rotors,
- Fig. 3: Seitenansicht des Rotors in Fig. 2 mit einem durchsichtig dargestellten Rotorblatt.

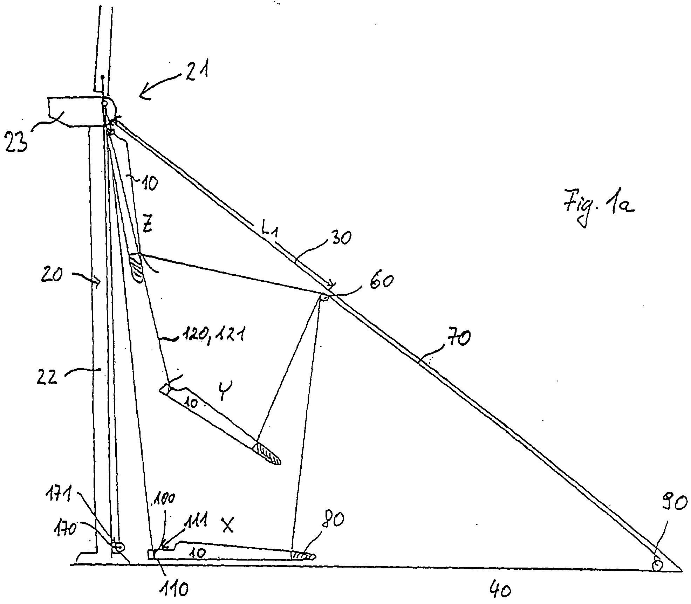

In Fig. 1a sind drei Verfahrensschritte der Demontage oder Montage eines Rotorblatts 10 übereinander projiziert dargestellt. Die Positionen X, Y, Z des Rotorblattes 10 werden in dieser Reihenfolge bei der Montage des Rotorblattes 100 an eine Windkraftanlage 20 durchlaufen. Bei der Demontage des Rotorblattes 10 werden die Verfahrensschritte in umgekehrter Reihenfolge Z, Y, X durchlaufen.

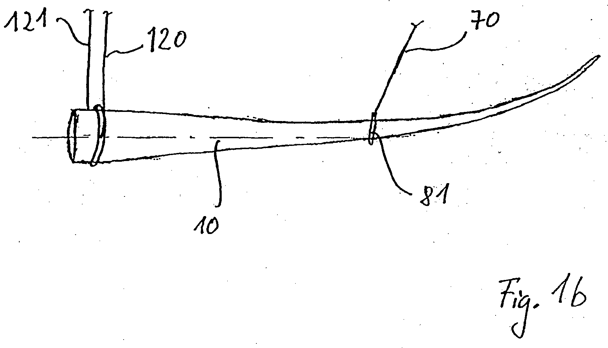

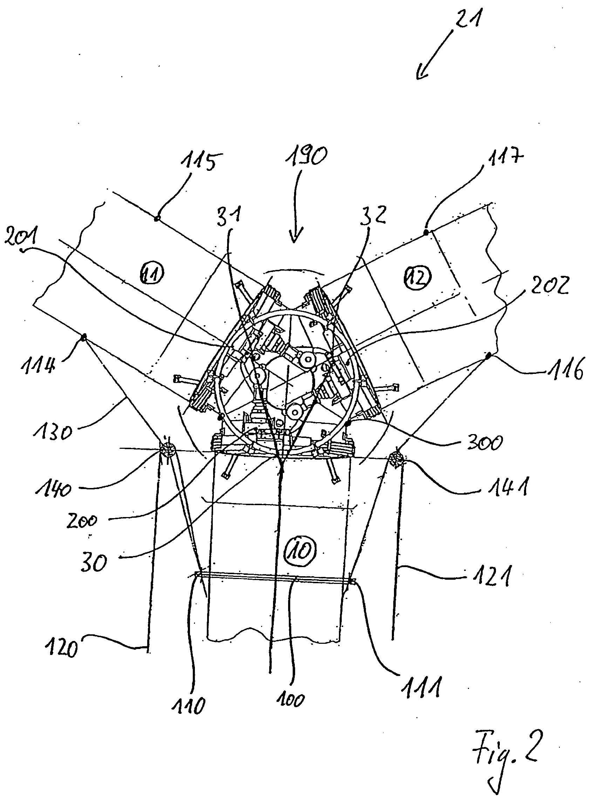

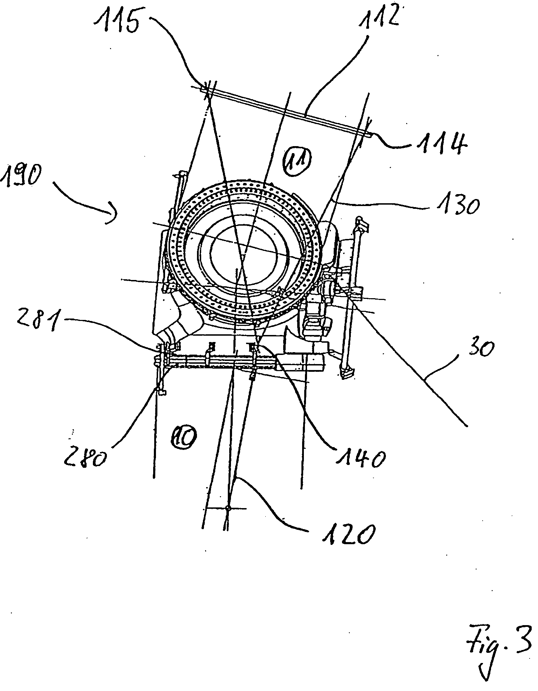

Die in Fig. 1 a dargestellte Montage/Demontagevorrichtung weist ein schräg gespanntes Führungsseil 30 zwischen einem Turmkopf 21 der Windkraftanlage 20 und einem Boden 40 auf. Das Führungsseil 30 ist mit einem Ende an einem Turmkopf 21, wie in den Fig. 2 und 3 gezeigt, an einer Rotornabe 190 oder alternativ an zwei montierten Rotorblättern 11, 12 lösbar befestigt, das andere Ende des Führungsseils 30 ist mittels eines (nicht eingezeichneten) Bodenankers lösbar im Boden 40 verankert. Alternativ zum Bodenanker kann ein Schlepper oder schwerer Traktor o.ä. eingesetzt werden. Das Führungsseil 30 in Fig. 1 ist etwa in einem Winkel von knapp 45° zur Bodenoberfläche gespannt. Bei einer Turmhöhe von 100m läge die Länge des Führungsseils 30 hier bei etwa 155m. Es wäre in einem Abstand von etwa 120m zu einem Turm 22 im Boden 40 verankert. Bei begrenzten Raumverhältnissen am Standort der Windkraftanlage 20 kann es sinnvoll sein, die Verankerung des Führungsseils 30 in geringerem Abstand als die Turmhöhe, z.B. bei 80m vorzunehmen.

Das Führungsseil 30 wird zur Montage bzw. Demontage des Rotorblatts 10 extra gespannt, im Betrieb der Windkraftanlage 20 ist es entfernt.

Am Führungsseil 30 ist ausgehend von dessen einem Ende nach einer Länge L1, deren Projektion auf den Boden 40 etwas mehr als der Länge eines Rotorblattes 10 entspricht, eine Halteseilumlenkrolle 60 befestigt. Die Halteseilumlenkrolle 60 ist rutschfest am Führungsseil 30 befestigt und bleibt während der Montage bzw. Demontage des Rotorblattes 10 in ihrer Position entlang des Führungsseils 30 unverändert. Die Position der Halteseilumlenkrolle 60 entlang des Führungsseils 30 ist verstellbar. Somit kann die Position der Halteseilumlenkrolle 60 der Montage bzw. Demontage unterschiedlich langer Rotorblätter 10 bei verschiedenen Windkraftanlagen 20, sowie unterschiedlichen Standortverhältnissen angepasst werden.

In die Halteseilumlenkrolle 60 ist ein Halteseil 70 eingeschoren, dessen eines Ende mit einer Tasche 80 fest verbunden ist und dessen anderes Ende zu einer Halteseilwinde 90 geführt ist. Das Halteseil 70 kann auf der Halteseilwinde 90 aufgerollt und abgerollt werden. Dabei wird eine in die Tasche 80 gesteckte Spitze des Rotorblatts 10 angehoben bzw. abgesenkt. Alternativ kann die Halteseilwinde 90 auch an die Spitze des Rotorblatts 10 oder am Turmkopf 21 oder anstelle der Halteseilumlenkrolle 60 vorgesehen sein.

Um eine der Spitze des Rotorblatts 1 gegenüberliegende Rotorblattwurzel ist eine Manschette 100 zur Montage bzw. Demontage gelegt. Die Manschette 100 ist auch in Fig. 2 gezeigt. Die Manschette 100 weist an sich gegenüberliegenden Stellen Anschlagpunkte 110, 111 für Enden jeweils eines Lastseils 120, 121 auf. Die Manschette 100 verfügt über eine Spannvorrichtung mit der sie kraftschlüssig um die Blattwurzel gespannt werden kann. Alternativ ist die Manschette 100 innenseitig mit Blähkörpern ausgestattet, die mit Druckluft oder Wasser aufblasbar bzw. befüllbar sind. Jedes der beiden Lastseile 120, 121 ist neben und im Wesentlichen parallel zu dem Turm 22 der Windkraftanlage 20 zum Turmkopf 21 geführt. Am Turmkopf 21 ist jedes der beiden Lastseile 120, 121 über jeweils eine Lastseilumlenkrolle 140, 141 und im Wesentlichen parallel zum Turm 22 zu jeweils einer an einem Turmfuß angeordneten Lastseilwinde 170, 171 geführt. Die beiden Lastseile 120, 121 können mit Hilfe der beiden Lastseilwinden 170, 171 aufgerollt und abgerollt werden. Dabei wird die Rotorblattwurzel angehoben bzw. abgesenkt. Das Rotorblatt 10 wird während der Montage/Demontage an insgesamt drei Anschlagpunkten 80, 110, 111 stabil im Raum gehalten.

Ein vorgekrümmtes Rotorblatt 10, ein so genanntes "banana blade" ist in Fig. 1 b dargestellt. Das Rotorblatt10 ist in Betriebsstellung mit seiner Rotorblattspitze vom Turm 22 weg gekrümmt. Damit wird die Gefahr, dass die Rotorblattspitze im Betrieb gegen den Turm 22 schlägt, gemindert. Bei derartigen, vorgekrümmten Rotorblättern 10 kann es sinnvoll sein, sie wie in Fig. 1b dargestellt auf ihrer flachen Seite liegend zu transportieren und anzuheben. Dazu wird mittels einer Manschette 81, die, um ein Umschlagen der Rotorblatts 10 während des Transports zu verhindern, wurzelseitig der Hauptkrümmung befestigt ist, ein Anschlagpunkt für das Halteseil 70 geschaffen.

Fig. 2 zeigt den Turmkopf 21 in einer Frontalansicht. Dabei ist ein Spinner abgenommen und der Blick in eine Rotornabe 190 freigelegt. Das zu demontierende Rotorblatt 10 ist in 6-Uhr Stellung unter die Rotornabe 190 gedreht. Fig. 2 zeigt auch zwei obere, montierte Rotorblätter 11, 12 in V-Stellung. Die Rotornabe 190 weist für jedes Rotorblatt 10, 11, 12 eine ihm zugeordnete Winkelverstellvorrichtung 200, 201, 202 auf, mit der jedes Rotorblatt 10, 11, 12 um seine Längsachse winkelverstellbar ist: In Fig. 2 sind die Rotorblätter 10, 11, 12 in Fahnenstellung gedreht, so dass der Wind keine Angriffsfläche hat. Das Rotorblatt 11 weist, von seiner Rotorblattwurzel beabstandet, jeweils zwei in der Außenwandung integrierte Anschlagpunkte 114, 115 und das Rotorblatt 12 weist in gleicher Position zwei integrierte Anschlagpunkte 116, 117 auf. Von den jeweils zwei Anschlagpunkten 114, 115 bzw. 116, 117 ist jeweils einer 114 bzw. 116 in der Fahnenstellung unten am Rotorblatt 11 bzw. 12, und ein Anschlagpunkt 115 bzw. 117 ist oben auf dem Rotorblatt 11 bzw. 12 angeordnet. Von den beiden unteren Anschlagpunkten 114, 116 der beiden oberen Rotorblätter 11, 12 geht jeweils ein Verbindungsseil 130, 131 ab, an dessen den Anschlagpunkten 114, 116 gegenüberliegenden Enden die Lastseilumlenkrollen 140, 141 angeordnet sind. In jede der beiden Lastseilumlenkrollen 140, 141 ist eines der beiden Lastseile 120, 121 eingeschoren. Die einen Enden der beiden Lastseile 120, 121 sind mit den beiden Anschlagpunkten 110, 111 der Manschette 100 verbunden, die lösbar an dem Rotorblatt 10 befestigt ist.

In dem in Fig. 2 gezeigten Zustand kann mit der eigentlichen Demontage des unteren Rotorblatts 10 begonnen werden. Der Aufbau der Demontagevorrichtung selber erfolgt dabei in beispielsweise folgenden Schritten:
Zunächst wird ein oberes, montiertes Rotorblatt 11 in Fig. 2 im Uhrzeigersinn in 12-Uhr Stellung gebracht. Eine Wartungsperson kann vom Dach eines Maschinenhauses 23 aus dann ein Verbindungsseil 130 mit Lastseilumlenkrolle 140 an dem einen Anschlagpunkt 114 des einen oberen Rotorblatts 11 befestigen. In die Lastseilumlenkrolle 140 wird ein leichtes Hilfsseil, z.B. ein Nylonseil, eingeschoren, dessen beide Enden zum Boden 40 herabgelassen werden. An das eine Ende des Hilfsseils wird mittels eines geeigneten Seilverbinders das eine Ende eines Lastseils 120 befestigt. Mittels der einen Lastseilwinde 170 wird über das Hilfsseil das eine Lastseil 120 in die eine Lastseilumlenkrolle 140 eingeschoren und sein eines Ende ein Stück weit durch die Lastseilumlenkrolle 140 gezogen. Das eingeschorene Ende des Lastseils 120 wird mittels Seilstoppern gesichert.

Der Rotor wird dann um 120° entgegen dem Uhrzeigersinn gedreht und der entsprechende Vorgang wird für das andere, obere montierte Rotorblatt 12 wiederholt.

Dann wird die Manschette 100 um das zu demontierende Rotorblatt 10 gelegt. Dazu wird das Rotorblatt 10 im Uhrzeigersinn in 12-Uhr Stellung gedreht und die Wartungsperson kann vom Dach des Maschinenhauses aus die Manschette 100 um die Wurzel des zu demontierenden Rotorblatts 10 legen. Dann wird das eine Ende des einen Lastseils 120 an dem einen Anschlagpunkt 110 der Manschette 100 befestigt.

Das zu demontierende Rotorblatt 10 wird dann wieder entgegen dem Uhrzeigersinn in 6-Uhr Stellung gedreht und weiter entgegen dem Uhrzeigersinn wieder in 12-Uhr Stellung gebracht und der Befestigungsvorgang für das eine Ende des anderen Lastseils 121 wiederholt, damit wird auch das andere Lastseil 121 an dem anderen Anschlagpunkt 111 der Manschette 100 befestigt. Das zu montierende Rotorblatt kann wieder im Uhrzeigersinn in 6-Uhr Stellung gebracht werden.

Alternativ kann die Montage der Manschette 100 und das Befestigen der Lastseile 120, 121 auch durch einen Seilkletterer in 6-Uhr-Stellung erfolgen.

Das Führungsseil 30 wird konfektioniert, d.h. mit Halteseilumlenkrolle 60 und eingeschorenem Halteseil 70, in das Maschinenhaus 23 gebracht. Das eine Ende des Halteseils 70 wird an der Tasche 80 befestigt und die Tasche wird beispielsweise mittels eines Seilkletterers über die Spitze des Rotorblatts 10 gesteckt und mit einem Hilfsseil am Runterrutschen gehindert.

Danach wird das eine Ende des Führungsseils 30 vom an der Rotornabe 190 befestigt. Die Rotornabe 19 kann dazu, z.B., ein zur Spitze des Spinners verlaufendes festes Rohr aufweisen, an dessen Ende das Führungsseil 30 befestigt wird (in Fig. 2 und 3 nicht dargestellt). Das Führungsseil 30 ist vorteilhafter Weise an einem auf der Drehachse der Rotornabe 190 liegenden Anschlagpunkt befestigt. Dann kann die Rotornabe 190 auch nach der Montage des Führungsseils 30 gedreht werden. Nachdem das eine Ende des Führungsseils 30 an der Rotornabe 190 befestigt ist, wird das restliche, konfektionierte Führungsseil 30, 60, 70 herabgelassen, gespannt und verankert. In Fig. 2 ist das Führungsseil 30 alternativ in zwei Anschlagpunkten 31, 32 an der Rotornabe 190 befestigt.

Es ist auch möglich, die Montagereihenfolge von Lastseilen 120, 121 mit zugehörigen Lastseilrollen 140, 141 usw. und dem Führungsseil 30 zu vertauschen. Dabei sollte der Anschlagpunkt 31, 32 für das Führungsseil 30 auf der Rotationsachse der Rotornabe 190 liegen. Das zuerst montierte Führungsseil 30 bietet dann die Möglichkeit, einen Mannkorb, z.B. mittels einer weiteren Umlenkrolle oder mittels der dicht zur Rotornabe 190 aufgeholten Halteseilumlenkrolle 60, entlang des in 6-Uhr-Stellung stehenden Rotorblatts 10 zu verfahren. Damit können Montagearbeiten, wie das Überziehen der Tasche 80 oder das Anbringen der Lastseile 120, 121 auch ohne Seilkletterer durchgeführt werden.

Unabhängig von der Montagereihenfolge von Halteseil 30 und Lastseilen 120, 121 kann das Führungsseil 30 mit der Halteseilwinde 90 gespannt werden. Dazu kann zusätzlich auch ein Flaschenzug verwendet werden.

In Fig. 3 ist eine sich von der in Fig. 2 dargestellten Demontagevorrichtung unterscheidende Vorrichtung abgebildet, da die Verbindungsseile 130, 131 dort V-förmig ausgebildet sind. Die Anschlagpunkte sind dort nicht in die Rotorblattwandung integriert, sondern an gegenüberliegenden Punkten 114, 115 einer Manschette 112 am Rotorblatt 11, bzw. 116, 117 einer (nicht eingezeichneten) Manschette am Rotorblatt 12 angeordnet. Abweichend von den Darstellungen weisen alle Rotorblätter 10, 11, 12 vorzugsweise identische Anschlagpunkte 110, 111, 114, 1115, 116, 117, entweder integrierte oder durch Manschetten 100, 112 zur Verfügung gestellte Anschlagpunkte 110, 111, 114, 1115, 116, 117 auf.

Die Demontagevorrichtung ist montiert und die Demontage des unteren Rotorblatts 10 kann in der in Fig. 2 und Fig. 3 dargestellten Position beginnen.

Bei der Demontage des Rotorblatts 10 wird die Blattflanschverschraubung 280, 281 vorsichtig gelöst, wobei die Ausrichtung des Rotorblatts 10 über das Halteseil 70 und die beiden Lastseile 120, 121 und die Winkelverstelleinrichtungen 200, 201, 202 korrigiert wird. Dann kann der Blattflanschverschraubung 280, 281 vollständig gelöst und das Rotorblatt 10 herabgelassen werden. Dabei wird das Rotorblatt 10 möglichst frühzeitig mit dem Halteseil 70 vom Turm 22 weggezogen, um eine Kollision mit dem Turm 22 der Windkraftanlage 20 zu vermeiden.

Die Montage der Montagevorrichtung verläuft sehr ähnlich der Montage der Demontagevorrichtung, und sie wird deshalb nicht im Detail beschrieben. Unterschiedlich ist, dass die Lastseile 120, 121 weiter durch die Lastseilumlenkrollen 140, 141 geschoren werden und das jeweils eine Ende des Halteseils 120, 121 zum Boden herab gelassen werden kann und die Montage der Tasche 80 dort erfolgt.

Bei der Montage des Rotorblatts 10 werden dann sofort alle drei Seilwinden 90, 170, 171 betätigt, und das Rotorblatt 10 wird in waagerechter (horizontaler) Stellung im Wesentlichen senkrecht zur Bodenoberfläche angehoben. Die Montagevorrichtung ermöglicht eine Entladung des Rotorblatts 10 direkt vom Transportfahrzeug. Das Rotorblatt 10 wird in der waagerechten Position möglichst weit hochgezogen. Nachdem das Rotorblatt 10 hochgezogen worden ist, wird die Halteseilwinde 90 in entgegen gesetzter Richtung der beiden Lastseilwinden 170, 171 betätigt. Somit dreht sich das Rotorblatt 10 um eine seiner Querachsen. Dieser Vorgang wird so lange fortgesetzt, bis das Rotorblatt 10 im Wesentlichen senkrecht zur Bodenoberfläche und parallel zum Turm 22 unter dem Turmkopf 21 positioniert ist. Dabei bleibt das Halteseil 70 so weit angezogen, dass das Rotorblatt 10 nicht gegen den Turm 22 schlagen kann.

Zur Abstimmung der Umdrehungszahlen und -geschwindigkeiten der beiden Lastseilwinden 170, 171 und der Halteseilwinde 90 ist eine (nicht eingezeichnete) Steuereinrichtung vorgesehen. Jede Seilwinde 90, 170, 171 ist vorzugsweise individuell ansteuerbar.

Das Gewicht des Rotorblatts 10 beträgt hier zwischen 4 bis 7 t. Die Traglast des Führungsseils 30 ist anhängig von der gewünschten Seilspannung und beträgt mehr als 8t. Die Traglast der beiden Lastseile 120, 121 läge hier einschließlich Sicherheitslast bei je etwa 6 t und die Traglast des einen Halteseils 70 einschließlich Sicherheitslast bei etwa 2 bis 3t.

Bei der Montage des Rotorblattes 10 ist gegen Ende der Montage der Abgleich der Flanschbilder des am Rotorblatt 10 angeordneten Flansches 280 und des an der Rotornabe 190 angeordneten Flansches 281 notwendig. Der am Rotorblatt 10 angeordnete Flansch 280 weist abstehende Bolzen auf, und der an der Rotornabe 190 angeordnete Flansch 281 weist den Bolzen zugeordnete Löcher auf. Die beiden Flanschbilder müssen zunächst zur Deckung gebracht werden und dann ineinander gesteckt werden. Um die beiden Flanschbilder überhaupt zur Deckung bringen zu können, muss das Rotorblatt 10 exakt zur Rotornabe 190 hin geführt werden. Die Position des Rotorblattes 10 kann durch Betätigung der Seilwinden 90, 170, 171 der drei Seile 70, 120, 121 und der Winkelverstellvorrichtungen 201, 202 der beiden oberen Rotorblätter 11, 12 genau gesteuert werden. Ein weiterer Abgleichfreiheitsgrad besteht in der Betätigung der dem freien Flansch 281 zugeordneten Winkelverstellvorrichtung 200 mit dem der zugehörige Flansch drehbar ist.

Die Position des Rotorblattes 10 bezüglich seiner Winkelstellung zum Turm 22 kann mit Hilfe des einen Halteseils 70 gesteuert werden. Durch Anziehen des Halteseils 70 ist die Spitze des Rotorblattes 10 vom Turm 22 wegbewegbar und durch Nachgeben des Halteseils 70 bewegt sich die Spitze des Rotorblattes 10 zum Turm 22 hin. In entsprechender Weise kann eine Winkelstellung in der durch das Führungsseil 30 und den Turm 22 aufgespannten Ebene der beiden Flansche 280, 281 zueinander eingestellt werden.

Die Winkelstellung der beiden Flansche 280, 281 senkrecht zu der genannten Ebene kann durch relative Verstellung der beiden Lastseile 120, 121 erfolgen. Durch Anziehen des in Fig. 2 linken Lastseils 120 wird der Abstand zwischen dem Flansch 280 des Rotorblatts 10 und dem Flansch 281 der Rotornabe 190 auf der linken Seite verringert. Durch Anziehen des in Fig. 2 rechten Lastseils 141 wird der Abstand zwischen dem Flansch 281 des Rotorblatts 10 und dem Flansch 281 der Rotornabe 190 auf der rechten Seite verringert.

Der Abstand des Rotorblattes 10 bzw. der Rotorblattwurzel zum Turm 22 kann durch die beiden Winkelverstellvorrichtungen 201, 202 der beiden oberen Rotorblätter 11, 12 gesteuert werden. Die beiden oberen Rotorblätter 11, 12 sind dabei um eine Längsachse drehbar. Die Anschlagpunkte 114, 116 sind somit durch die Winkelverstellvorrichtungen 201. 202 der oberen Rotorblätter 11, 12 vom Turm 22 der Windkraftanlage 20 weg und zum Turm hin bewegbar.

Weiterhin kann als zusätzlicher Freiheitsgrad auch die Rotornabe 190 um ihre Drehachse gedreht werden.

Das Verfahren kann auch zum Austausch von zwischen den beiden Flanschen 280, 281 angeordneten Rotorblattlagern verwendet werden.

## Patentansprüche

1. Montage- und/oder Demontagevorrichtung für ein Bauteil (10) einer Windkraftanlage, insbesondere ein Rotorblatt, sowie eine Windkraftanlage (20) mit einem Turmkopf (21), die wenigstens ein zwischen dem Turmkopf (21) und einem Boden (40) gespanntes Führungsmittel (30) aufweist, an dem wenigstens eine Halteeinrichtung (60) angeordnet ist, **dadurch gekennzeichnet, dass** die Halteeinrichtung (60) eine Teillast des Gewichts des Bauteils (10) während eines Transports des Bauteils (10) zwischen dem Boden (40) und dem Turmkopf (21) der Windkraftanlage (20) hält und im Bereich des Turmkopfes (21) wenigstens eine Lasteinrichtung (140, 141) angeordnet ist, die eine weitere Teillast des Bauteils (10) während des Transportes des Bauteils (10) zwischen dem Boden (40) und der Windkraftanlage (20) hält, und von der wenigstens einen Lasteinrichtung (140, 141) ein Lastseil (120, 121) abgeht, dessen Länge zwischen Lasteinrichtung (140,141) und Bauteil (10) veränderbar ist, und von der Halteeinrichtung (60) wenigstens ein Halteseil (70) zum Bauteil (10) abgeht, dessen Länge zwischen Halteeinrichtung (60) und Bauteil (10) veränderbar ist.

2. Vorrichtung nach Anspruch 1,
**dadurch gekennzeichnet, dass** ein minimaler Abstand zwischen Windkraftanlage (20) und der Halteeinrichtung (60) wenigstens etwa 10 % der Höhe eines Turms (22) der Windkraftanlage (20) entspricht.

3. Vorrichtung nach wenigstens einem der Ansprüche 1 bis 2,
**dadurch gekennzeichnet, dass** die Halteeinrichtung (60) während der Montage/Demontage des Bauteils (10) im Wesentlichen ortsfest am Führungsmittel (30) angeordnet ist.

4. Vorrichtung nach wenigstens einem der Ansprüche 1 bis 3,
**dadurch gekennzeichnet, dass** die Halteeinrichtung eine Halteseilumlenkrolle (60) für das Halteseil (70) aufweist und ein Ende des Halteseils (70) in eine Halteseilwinde (90) eingeschoren ist.

5. Vorrichtung nach wenigstens einem der Ansprüche 1 bis 4,
**dadurch gekennzeichnet, dass** das Führungsmittel (30) zwischen Turmkopf (21) und Boden (40) schräg gespannt ist.

6. Vorrichtung nach wenigstens einem der Ansprüche 1 bis 5,
**gekennzeichnet durch** genau zwei, im Bereich des Turmkopfes (21) angeordnete Lasteinrichtungen (140, 141), die wenigstens eine weitere Teillast des Bauteils (10) während eines Transports des Bauteils (10) zwischen dem Boden (40) und der Windkraftanlage (20) halten.

7. Vorrichtung nach wenigstens einem der Ansprüche 1 bis 6,
**dadurch gekennzeichnet, dass** das zu montierende/demontierende Bauteil (10) ein Rotorblatt ist und das Rotorblatt Anschlagpunkte (110, 111) für andere Enden des wenigstens einen Last- und/oder des wenigstens einen Halteseils (140, 41, 70) aufweist.

8. Vorrichtung nach Anspruch 7,
**dadurch gekennzeichnet, dass** die integrierten Anschlagpunkte (110, 111, 114, 115, 116, 117) der montierten und des zu montierenden/demontierenden Rotorblatts (10, 11, 12) baugleich sind.

9. Vorrichtung nach wenigstens einem der Ansprüchen 1 bis 8,
**dadurch gekennzeichnet, dass** beabstandet von der Rotorblattwurzel des zu montierenden/demontierenden Rotorblatts (10) Anschlagpunkte (80) für das wenigstens eine Halteseil (70) vorgesehen sind.

10. Vorrichtung nach wenigstens einem der vorstehenden Ansprüche,
**gekennzeichnet durch** eine Steuereinrichtung zur Steuerung der Aufroll- oder Abrollgeschwindigkeit der Seilwinden (90, 170, 171).

11. Windenergieanlage und Vorrichtung nach wenigstens einem der vorstehenden Ansprüche mit einem Turm (22) und einem Turmkopf (21) und wenigstens einem Befestigungsmittel (31, 32) an einem Turmkopf (21) für ein Führungsmittel (30), das zwischen Turmkopf (21) und Boden (40) spannbar ist, an dem wenigstens eine Halteeinrichtung (60) anordnenbar ist, die eine Teillast des Gewichts eines zu montierenden und/oder demontierenden Bauteils (10) trägt, wobei im Bereich des Turmkopfes (21) wenigstens eine Lasteinrichtung (140, 141) angeordnet ist, die eine weitere Teillast des Bauteils (10) während des Transportes des Bauteils (10) zwischen dem Boden (40) und dem Turmkopf (21) der Windkraftanlage (20) hält, und von der Halteeinrichtung (60) wenigstens ein Halteseil (70) zum Bauteil (10) abgeht, dessen Länge zwischen Halteeinrichtung (60) und Bauteil (10) veränderbar ist.

12. Montage-/Demontageverfahren einer Vorrichtung nach wenigstens einem der Ansprüche 1 bis 10, eines Bauteils (10), insbesondere eines Rotorblatts, einer Windkraftanlage (20) mit einem Turmkopf (21), indem:
zwischen dem Turmkopf (21) und einem Boden (40) wenigstens ein Führungsmittel (30) gespannt wird und an dem Führungsmittel (30) eine Halteeinrichtung (60) angeordnet wird, **dadurch gekennzeichnet, dass** die Halteeinrichtung (60) eine Teillast des Gewichtes des Bauteils (10) während des Transportes des Bauteils (10) zwischen dem Boden (40) und dem Turmkopf (21) der Windkraftanlage (20) hält und das Bauteil (10) an einem von der Halteeinrichtung (60) abgehenden Halteseil (70) befestigt wird, dessen Länge zwischen der Halteeinrichtung (60) und dem Bauteil (10) so verändert wird, dass die Position des Bauteils (10) bezüglich seiner Winkelstellung zum Turm mithilfe des Halteseils (70) gesteuert wird
und im Bereich des Bodens (40) im Wesentlichen senkrecht zum Boden bewegt wird, und von der wenigstens einen Lasteinrichtung (140, 141) ein Lastseil (120, 121) abgeht, dessen Länge zwischen Lasteinrichtung (140, 141) und Bauteil (10) verändert wird.

13. Verfahren nach Anspruch 12,
**dadurch gekennzeichnet, dass** die Halteeinrichtung (60) am Führungsmittel (30) ortsfest angeordnet wird.

14. Verfahren nach Anspruch 12 oder 13,
**dadurch gekennzeichnet, dass** das Bauteil (10) bei der Montage zunächst mit einer Längsachse im Wesentlichen parallel zum Boden (40) angehoben wird und dann um eine zur Längsachse quer verlaufende Achse gedreht wird und bis zum Turmkopf (21) angehoben wird.

15. Verfahren nach wenigstens einem der Ansprüche 12 bis 14,
**dadurch gekennzeichnet, dass** das Bauteil (10) bis zu einer maximalen Höhe, im Wesentlichen parallel zum Boden (40) ausgerichtet, senkrecht angehoben wird.

16. Verfahren nach Anspruch 12 oder 13,
**dadurch gekennzeichnet, dass** das Rotorblatt (10) bei der Demontage zunächst von der Rotornabe (190) gelöst wird, das Rotorblatt (10) in maximaler Höhe um eine Querachse gedreht wird, bis die Längsachse im Wesentlichen parallel zum Boden (40) angeordnet ist und das Rotorblatt (10) dann im Wesentlichen senkrecht zum Boden (40) abgesenkt wird.

## Claims

1. An apparatus for mounting and/or dismantling a component (10) of a wind turbine, in particular of a rotoblade as well as of a wind turbine (20) with a tower head (21) that comprises at least one guide means (30) tensioned between the tower head (21) and the ground (40), on which guide means at least one holding apparatus (60) is arranged that holds at least a partial load of the weight of the component (10) during a transport of the component (10) between the ground (40) and the tower head (21) of the wind turbine (20) and at least one loading apparatus (140, 141) that is arranged in the area of the tower head (21) and holds at least one further partial load of the component (10) during a transport of the component (10) between the ground (40) and the wind turbine (20) and a loading cable (120,121) runs from the at least one loading apparatus (140,141), the length of which can be varied between the loading apparatus (140,141) and component(10) and at least one holding cable (70) runs from the holding apparatus (60) to the component (10) the length of which can be varied between the holding apparatus (60) and the component (10).

2. The apparatus according to Claim 1, **characterized in that** a minimal distance between the wind turbine (20) and the holding apparatus (60) corresponds at least to approximately 10% of the height of a tower (22) of the wind turbine (20).

3. The apparatus according to at least one of Claims 1 to 2, **characterized in that** the holding apparatus (60) is arranged substantially fixed on the guide means (30) during the mounting/dismantling of the component (10).

4. The apparatus according to at least one of Claims 1 to 3, **characterized in that** the holding apparatus comprises a holding cable deflection roller (60) for the holding cable (70) and that one end of the holding cable (70) is reeved into a holding cable winch (90).

5. The apparatus according to at least one of Claims 1 to 4, **characterized in that** the guide means (30) is obliquely tensioned between the tower head (21) and the ground (40).

6. The apparatus according to at least one of Claims 1 to 5, **characterized by** exactly two loading apparatus (140, 141) that are arranged in the area of the tower head (21) and hold at least one further partial load of the component (10) during a transport of the component (10) between the ground (40) and the wind turbine (20).

7. The apparatus according to at least one of Claims 1 to 6, **characterized in that** the component (10) to be mounted/dismantled is a rotor blade and that the rotor blade comprises fastening points (110, 111) for other ends of the at least one loading cable and/or of the at least one holding cable (140, 41, 70).

8. The apparatus according to Claim 7, **characterized in that** the integrated fastening points (110, 111, 114, 115, 116, 117) of the rotor blades that are mounted and of the rotor blade to be mounted/dismantled (10, 11, 12) have the same construction.

9. The apparatus according to at least one of Claims 1 to 8, **characterized in that** fastening points (80) for the at least one holding cable are provided at a distance from the rotor blade root of the rotor blade (10) to be mounted/dismantled.

10. The apparatus according to at least one of the previous claims, **characterized by** a control apparatus for controlling the roll-on or roll-off speed of the cable winches (90, 170, 171).

11. A wind energy turbine and apparatus according to at least one of the previous claims with a tower (22) and a tower head (21) and at least one fastening means (31, 32) on a tower head (21) for a guide means (30), that can be tensioned between the tower head (21) and the ground (40), on which at least one holding apparatus (60) can be arranged that carries at least a partial load of the weight of a component (10) to be mounted and/or dismantled, in which at least one loading apparatus (140, 141) that is arranged in the area of the tower head (21) and holds at least one further partial load of the component (10) during a transport of the component (10) between the ground (40) and the tower head (21) of the wind turbine (20) and at least one holding cable (70) runs from the holding apparatus (60) to the component (10) the length of which can be varied between the holding apparatus (60) and the component (10).

12. A process for mounting/dismantling of an apparatus according to at least one of Claims 1 to 10, of a component (10), in particular of a rotor blade of a wind turbine (20) with a tower head (21), in that at least one guide means (30) is tensioned between the tower head (21) and the ground (40), and on which a holding apparatus (60) is arranged, **characterized in that** the holding apparatus (60) holds a partial load of the weight of the component (10) during the transport of the component (10) between the ground (40) and the tower head (21) of the wind turbine (20) and the component is fastened to a holding means (70), that runs from the holding apparatus (60) and whose length is varied in such a way between the holding apparatus (60) and the component (10) that the position of the component (10) is controlled with respect to its angular position to the tower by means of the holding mean (70), and is moved in the area of the ground (40) substantially vertically to the ground (40), and a loading cable runs from the at least one loading apparatus (140, 141), the length of which is varied between the loading apparatus (140, 141) and the component (10).

13. The process according to Claim 12, **characterized in that** the holding apparatus (60) is fixed to the guide means (30).

14. The process according to Claim 12 or 13, **characterized in that** the component (10) is first raised during the mounting with a longitudinal axis substantially parallel to the ground (40), is then rotated about an axis running transversely to the longitudinal axis and is raised up to the tower head (21).

15. The process according to at least one of the claims 12 to 14, **characterized in that** the component (10) is raised vertically to a maximal height aligned substantially parallel to the ground (40).

16. The process according to Claim 12 or 13, **characterized in that** the rotor blade (10) is first separated from the rotor hub (190) at the dismantling, the rotor blade (10) is rotated about a transverse axis at maximal height until the longitudinal axis is arranged substantially parallel to the ground (40) and the rotor blade (10) is then lowered substantially vertically to the ground (40).

## Revendications

1. Dispositif de montage et/ou de démontage pour un composant (10) d'une éolienne, en particulier une pale de rotor, ainsi qu'une éolienne (20) avec une section supérieure de tour (21) qui présente au moins un moyen de guidage (30), tendu entre la section supérieure de tour (21) et un sol (40), sur lequel au moins un dispositif de support (60) est placé, **caractérisé en ce que** le dispositif de retenue (60) supporte une charge partielle du poids du composant (10) pendant un transport du composant (10) entre le sol (40) et la section supérieure de tour (21) de l'éolienne (20) et qu'au moins un dispositif de charge (140, 141) est placé dans la zone de la section supérieure de tour (21), dispositif qui supporte une autre charge partielle du composant (10) pendant le transport du composant (10) entre le sol (40) et l'éolienne (20) et dispositif de charge (140, 141) qui existe au moins à partir d'où part un câble porteur (120, 121) dont la longueur entre le dispositif de charge (140, 141) et le composant (10) est variable et dispositif de retenue (60) d'où part au moins un câble de retenue (70) vers le composant (10) dont la longueur entre le dispositif de retenue (60) et le composant (10) est variable.

2. Dispositif selon la revendication 1, **caractérisé en ce qu'**une distance minimale entre l'éolienne (20) et le dispositif de retenue (60) correspond à au moins approximativement 10% de la hauteur d'une tour (22) de l'éolienne (20).

3. Dispositif selon au moins l'une des revendications 1 à 2, **caractérisé en ce que** le dispositif de retenue (60) est placé pendant le montage/démontage du composant (10) de manière substantiellement stationnaire sur le moyen de guidage (30).

4. Dispositif selon au moins l'une des revendications 1 à 3, **caractérisé en ce que** le dispositif de retenue présente une poulie de renvoi du câble de retenue (60) pour le câble de retenue (70) et qu'une extrémité du câble de retenue (70) est tendue dans un treuil de câble de retenue (90).

5. Dispositif selon au moins l'une des revendications 1 à 4, **caractérisé en ce que** le moyen de guidage (30) est tendu en biais entre la section supérieure de tour (21) et le sol (40).

6. Dispositif selon au moins l'une des revendications 1 à 5, **caractérisé par** exactement deux dispositifs de charge (140, 141), placés dans la zone de la section supérieure de tour (21), qui supportent au moins une autre charge partielle du composant (10) pendant un transport du composant (10) entre le sol (40) et l'éolienne (20).

7. Dispositif selon au moins l'une des revendications 1 à 6, **caractérisé en ce que** le composant à monter/à démonter (10) est une pale de rotor et la pale de rotor présente des points d'accrochage (110, 111) pour d'autres extrémités du câble de charge qui existe au moins et/ou du câble de retenue qui existe au moins (140, 41, 70).

8. Dispositif selon la revendication 7, **caractérisé en ce que** les points d'accrochage intégrés (110, 111, 114, 115, 116, 117) de la pale de rotor montée et de la pale de rotor à monter/à démonter (10, 11, 12) sont de configuration identique.

9. Dispositif selon au moins l'une des revendications 1 à 8, **caractérisé en ce que** des points d'accrochage (80) sont prévus pour le câble de retenue qui existe au moins (70) en étant espacés de la racine de la pale de rotor de la pale de rotor à monter/à démonter (10).

10. Dispositif selon au moins l'une des revendications précédentes, **caractérisé par** un dispositif de commande pour la commande de la vitesse d'enroulement ou de déroulement des treuils de câble (90, 170, 171).

11. Eolienne et dispositif selon au moins l'une des revendications précédentes avec une tour (22) et une section supérieure de tour (21) et au moins un moyen de fixation (31, 32) sur une section supérieure de tour (21) pour un moyen de guidage (30), qui peut être tendu entre la section supérieure de tour (21) et le sol (40), sur lequel au moins un dispositif de retenue (60) peut être placé, dispositif qui porte une charge partielle du poids d'un composant à monter et/ou à démonter (10), cependant qu'au moins un dispositif de charge (140, 141) est placé dans la zone de la section supérieure de tour (21), dispositif qui supporte une autre charge partielle du composant (10) pendant le transport du composant (10) entre le sol (40) et la section supérieure de tour (21) de l'éolienne (20) et du dispositif de retenue (60) part au moins un câble de retenue (70) vers le composant (10) dont la longueur entre le dispositif de retenue (60) et le composant (10) est variable.

12. Procédé de montage/de démontage d'un dispositif selon au moins l'une des revendications 1 à 10, d'un composant (10), en particulier d'une pale de rotor, d'une éolienne (20) avec une section supérieure de tour (21), cependant qu'au moins un moyen de guidage (30) est tendu entre la section supérieure de tour (21) et un sol (40) et qu'un dispositif de retenue (60) est placé sur le moyen de guidage (30), **caractérisé en ce que** le dispositif de retenue (60) supporte une charge partielle du poids du composant (10) pendant le transport du composant (10) entre le sol (40) et la section supérieure de tour (21) de l'éolienne (20) et le composant (10) est fixé à un câble de retenue (70) qui part du dispositif de retenue (60), câble de retenue dont la longueur entre le dispositif de retenue (60) et le composant (10) est variée de telle façon que la position du composant (10) est commandée au moyen du câble de retenue (70) pour ce qui est de sa position angulaire par rapport à la tour, et est déplacé dans la zone du sol (40) substantiellement perpendiculairement au sol et dispositif de charge qui existe au moins (140, 141) à partir d'où part un câble porteur (120, 121) dont la longueur entre le dispositif de charge (140, 141) et le composant (10) est variée.

13. Procédé selon la revendication 12, **caractérisé en ce que** le dispositif de retenue (60) est placé de manière stationnaire sur le moyen de guidage (30).

14. Procédé selon la revendication 12 ou 13, **caractérisé en ce que**, lors du montage, le composant (10) est tout d'abord soulevé avec un axe longitudinal substantiellement parallèlement au sol (40) et est ensuite tourné autour d'un axe qui est transversal par rapport à l'axe longitudinal et est soulevé jusqu'à la section supérieure de tour (21).

15. Procédé selon au moins l'une des revendications 12 à 14, **caractérisé en ce que** le composant (10) est soulevé jusqu'à une hauteur maximale en étant orienté substantiellement parallèlement au sol (40).

16. Procédé selon la revendication 12 ou 13, **caractérisé en ce que**, lors du démontage, la pale de rotor (10) est tout d'abord détachée du moyeu de rotor (190), la pale de rotor (10) est tournée à une hauteur maximale autour d'un axe transversal jusqu'à ce que l'axe longitudinal soit placé substantiellement parallèlement au sol (40) et la pale de rotor (10) est ensuite descendue substantiellement perpendiculairement au sol (40).
